# EUROPEAN PATENT APPLICATION

(11) **EP 4 672 064 A1**
(43) Date of publication of application: **31.12.2025**
(21) Application number: 25185001.2
(22) Date of filing: 24.06.2025
(51) Int. Cl.: G06F 21/62, G06F 21/84, G06F 21/74, G06F 21/31, G06F 21/60

(54) **INFORMATION PROCESSING APPARATUS, DISPLAY MODE SWITCHING PROGRAM, AND DISPLAY MODE SWITCHING METHOD**

(30) Priority: 28.06.2024 JP 2024105233
(71) Applicant: KYOCERA Document Solutions Inc., Osaka-shi, Osaka 540-8585 (JP)
(72) Inventor: MIYAI, Toshiya, Osaka-shi, Osaka, 540-8585 (JP); SARATANI, Ken, Osaka-shi, Osaka, 540-8585 (JP); ISHIKAWA, Suguru, Osaka-shi, Osaka, 540-8585 (JP); KONISHI, Kohei, Osaka-shi, Osaka, 540-8585 (JP); NAKANISHI, Shinichi, Osaka-shi, Osaka, 540-8585 (JP)
(74) Representative: Herrero & Asociados, S.L.

(57) **Abstract**

An image forming apparatus includes a controller (21) that switches a display mode of a password between a masked display mode that restricts the password from being visually recognized, and an express display mode that enables the password to be visually recognized, a switching operation decider (22) that decides whether a switching operation of the display mode has been performed, and a condition establishment decider (23) that decides whether a specific switching condition has been established. The controller (21) switches the display mode to the express display mode when the operation for switching to the express display mode is performed during the masked display mode, switches the display mode to the masked display mode when the operation for switching to the masked display mode is performed during the express display mode, and switches the display mode to the masked display mode when the specific switching condition is established during the express display mode.

## Description

### BACKGROUND

The present invention relates to an information processing apparatus, a display mode switching program, and a display mode switching method.

For example, an information processing apparatus has been disclosed that displays characters, numerals, and symbols constituting a password in turned letters (e.g., "**●**" or "*") on a display device, thereby disabling a third party from visually recognizing the content of the password, to protect the confidentiality of the password.

In such an information processing apparatus, in general, a first display mode and a second display mode are provided, as the display mode of the password. The first display mode includes displaying the password in a form that restricts the password from being viewed, for example by displaying the elements constituting the password, such as characters, numerals, and symbols in turned letters (e.g., "**●**" or "*") on the display device. The second display mode includes displaying the characters, numerals, and symbols constituting the password as they are, on the display device, thus visibly displaying the password.

In the first display mode, a first switch icon, to be pressed by the user to switch the display mode from the first display mode to the second display mode, is displayed on the display device. When the user presses the first switch icon, the information processing apparatus switches the display mode from the first display mode to the second display mode. In the second display mode, in addition, a second switch icon to be pressed by the user, to switch the display mode from the second display mode to the first display mode, is displayed on the display device. When the user presses the second switch icon, the information processing apparatus switches the display mode from the second display mode to the first display mode.

When the user wishes to confirm the password that the user has inputted, the user can visually confirm the password, by pressing the first switch icon. On the other hand, when the user wishes to protect the password from being viewed by a third party, the user can display the password in the form that restricts the password from being viewed, by pressing the second switch icon.

### SUMMARY

The invention proposes further improvement of the foregoing techniques. The invention relates to a technique to switch a display mode of specific information (e.g., confidential information such as a password), between a mode that enables the specific information to be viewed, and a mode that restricts the specific information from being viewed.

In an aspect, the invention provides an information processing apparatus including an operation device, a display device, a controller, a switching operation decider, and a condition establishment decider. To the operation device, information is inputted by a user. The controller causes the display device to display a screen including a region for displaying the information inputted to the operation device, and switches setting of a display mode of the information in the region, between a first display mode, including displaying the information in a first display form that restricts a content of the information from being visually recognized, and a second display mode, including displaying the information in a second display form that enables the content of the information to be visually recognized. The switching operation decider decides whether one of a first switching operation, for switching the display mode on the region from the first display mode to the second display mode, and a second switching operation, for switching the display mode on the region from the second display mode to the first display mode, has been performed through the operation device. The condition establishment decider decides whether a specific switching condition, different from a switching condition specifying that the second switching operation has been performed, has been established. The controller switches the setting of the display mode in the region from the first display mode to the second display mode, when the switching operation decider decides that the first switching operation has been performed, while the first display mode is set in the region, switches the setting of the display mode in the region from the second display mode to the first display mode, when the switching operation decider decides that the second switching operation has been performed, while the second display mode is set in the region, and switches the setting of the display mode in the region from the second display mode to the first display mode, when the condition establishment decider decides that the specific switching condition has been established, while the second display mode is set in the region.

In another aspect, the invention provides a computer-readable, non-transitory recording medium having a display mode switching program recorded thereon, the display mode switching program being configured to cause a computer to act as a controller, a switching operation decider, and a condition establishment decider. The controller causes a display device to display a screen including a region for displaying information inputted to an operation device, and switches setting of a display mode of the information in the region, between a first display mode, including displaying the information in a first display form that restricts a content of the information from being visually recognized, and a second display mode, including displaying the information in a second display form that enables the content of the information to be visually recognized. The switching operation decider decides whether one of a first switching operation, for switching the display mode on the region from the first display mode to the second display mode, and a second switching operation, for switching the display mode on the region from the second display mode to the first display mode, has been performed through the operation device. The condition establishment decider decides whether a specific switching condition, different from a switching condition specifying that the second switching operation has been performed, has been established. The controller switches the setting of the display mode in the region from the first display mode to the second display mode, when the switching operation decider decides that the first switching operation has been performed, while the first display mode is set in the region, switches the setting of the display mode in the region from the second display mode to the first display mode, when the switching operation decider decides that the second switching operation has been performed, while the second display mode is set in the region, and switches the setting of the display mode in the region from the second display mode to the first display mode, when the condition establishment decider decides that the specific switching condition has been established, while the second display mode is set in the region.

In still another aspect, the invention provides a display mode switching method including a controlling process, a switching operation deciding process, and a condition establishment deciding process. The controlling process includes causing a display device to display a screen including a region for displaying information inputted to an operation device, and switching setting of a display mode of the information in the region, between a first display mode, including displaying the information in a first display form that restricts a content of the information from being visually recognized, and a second display mode, including displaying the information in a second display form that enables the content of the information to be visually recognized. The switching operation deciding process includes deciding whether one of a first switching operation, for switching the display mode on the region from the first display mode to the second display mode, and a second switching operation, for switching the display mode on the region from the second display mode to the first display mode, has been performed through the operation device. The condition establishment deciding process includes deciding whether a specific switching condition, different from a switching condition specifying that the second switching operation has been performed, has been established. The controlling process further includes switching the setting of the display mode in the region from the first display mode to the second display mode, when the switching operation decider decides that the first switching operation has been performed, while the first display mode is set in the region, switching the setting of the display mode in the region from the second display mode to the first display mode, when the switching operation decider decides that the second switching operation has been performed, while the second display mode is set in the region, and switching the setting of the display mode in the region from the second display mode to the first display mode, when the condition establishment decider decides that the specific switching condition has been established, while the second display mode is set in the region.

### BRIEF DESCRIPTION OF THE DRAWINGS

Fig. 1 is a perspective view showing the appearance of an image forming apparatus, acting as an information processing apparatus according to an embodiment of the invention;
Fig. 2 is a block diagram schematically showing an internal configuration of the image forming apparatus shown in Fig. 1;
Fig. 3A to Fig. 3D are schematic drawings showing screen transitions, for explaining a specific example of a display mode switching operation, performed by the control device shown in Fig. 2;
Fig. 4A to Fig. 4C are schematic drawings showing screen transitions, for explaining another specific example of the display mode switching operation, performed by the control device shown in Fig. 2;
Fig. 5 is a flowchart showing a display mode switching operation performed by the image forming apparatus shown in Fig. 1;
Fig. 6 is a flowchart showing the display mode switching operation performed by the image forming apparatus shown in Fig. 1;
Fig. 7 is a flowchart showing the display mode switching operation performed by the image forming apparatus shown in Fig. 1;
Fig. 8A1 to Fig. 8B2 are schematic drawings showing panel transitions, for explaining a specific example of a display mode switching restricting operation, with respect to a device panel and a remote panel; and
Fig. 9A and 9B are schematic drawings each showing a screen for explaining a variation of a display form of a password.

### DETAILED DESCRIPTION

Hereafter, an image forming apparatus 1, acting as an information processing apparatus according to an embodiment of the invention, will be described with reference to the drawings. The image forming apparatus 1 is a multifunction peripheral having a plurality of functions, such as facsimile transmission, copying, printing, and scanning.

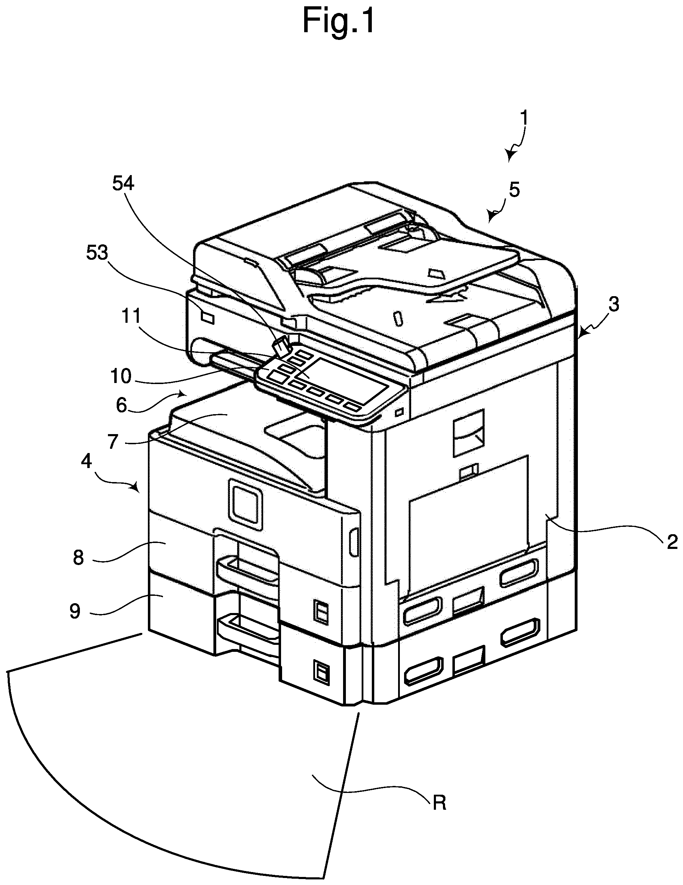

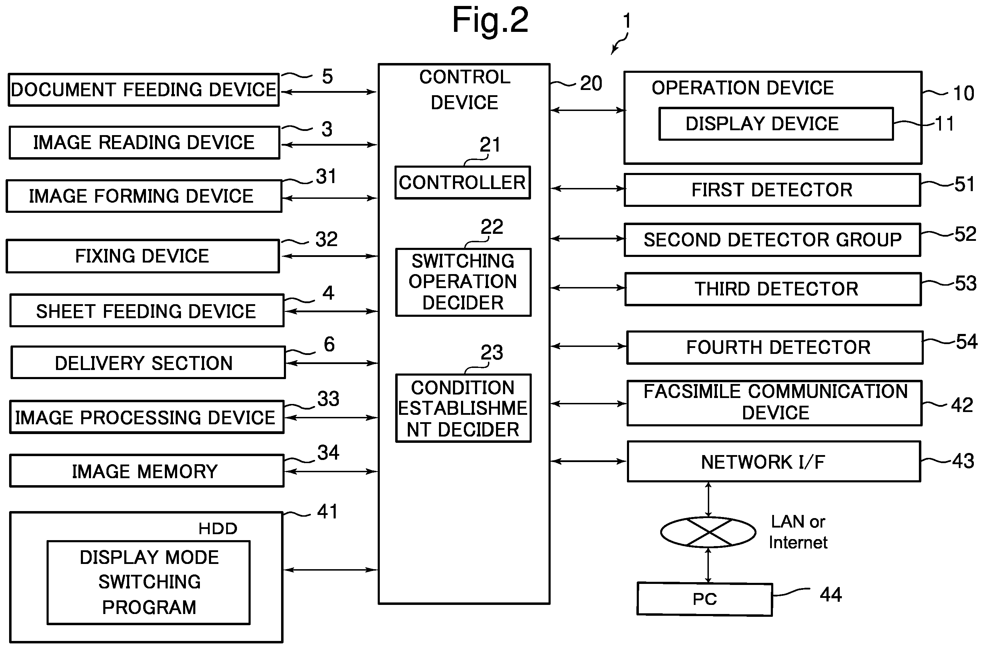

Fig. 1 is a perspective view showing the appearance of the image forming apparatus 1. The image forming apparatus 1 includes, inside a casing 2, a plurality of components for realizing various functions of the image forming apparatus 1. For example, an image reading device 3, an image forming device 31 (see Fig. 2), a fixing device 32 (see Fig. 2), and a sheet feeding device 4 are accommodated in the casing 2.

The image reading device 3 is configured as an automatic document feeder (ADF), including a document feeding device 5 that delivers documents, and a scanner that optically reads the document delivered from the document feeding device 5, or placed on a non-illustrated contact glass. The image reading device 3 emits light to the document from a light emitter and receives the reflected light with a charge-coupled device (CCD) sensor, thereby reading the image of the document and acquiring the image data. The image reading device 3 also includes a first detector 51 (see Fig. 2) that detects whether the document feeding device 5 is open. In other words, the first detector 51 is an open/close sensor. The open/close sensor may be a known device, for example a sensor having a mechanical switching unit. A detection signal outputted from the first detector 51 to a control device 20 (see Fig. 2) indicates the open state or closed state of the document feeding device 5.

The image forming device 31 includes a photoconductor drum, a charging device, an exposure device, a developing device, and a transfer device. The image forming device 31 forms a toner image on a recording sheet delivered from the sheet feeding device 4, on the basis of the image data acquired by the image reading device 3, image data received from a personal computer connected via the network or another facsimile machine.

The fixing device 32 performs a fixing operation, including heating the recording sheet, on the surface of which the toner image has been formed through the image forming operation by the image forming device 31, and fixing the toner image onto the recording sheet by thermal compression. After being subjected to the fixing operation by the fixing device 32, the recording sheet having the image formed thereon is delivered to a delivery section 6.

The delivery section 6 includes an output tray 7 for receiving the recording sheet having the image formed thereon and delivered from the fixing device 32, and a detector that detects whether the recording sheet is present on the output tray 7. The detector may be a known device, for example a reflective optical sensor including a light emitter that emits light to the recording sheet and a photodetector that receives the reflected light from the recording sheet, and configured to detect whether the recording sheet is present, on the basis of the volume of the light detected by the photodetector.

The sheet feeding device 4 picks up the recording sheets stored in a sheet cassette 8 or 9, or placed on a manual bypass tray, one by one, and feeds the recording sheet toward the image forming device 3. The sheet feeding device 4 includes a second detector group 52, including second detectors respectively corresponding to the sheet cassettes 8 and 9. The second detectors included in the second detector group 52 are open/close sensors. The open/close sensor may be a known device, for example a sensor having a mechanical switching unit. A detection signal outputted from the second detector corresponding to the sheet cassette 8, out of the second detector group 52, to the control device 20 indicates the open state or closed state of the sheet cassette 8. Likewise, a detection signal outputted from the second detector corresponding to the sheet cassette 9, out of the second detector group 52, to the control device 20 indicates the open state or closed state of the sheet cassette 9.

The image forming apparatus 1 includes an operation device 10 located on the front side of the image forming apparatus 1, at a position close to the image reading device 5. The operation device 10 receives the user's instructions inputted through the operation device 10, to execute the functions and operations that the image forming apparatus 1 is configured to perform. The operation device 10 includes a display device 11 having a touch panel function. The display device 11 displays, under the control of a controller 21, various types of screens such as a home screen, a log-in screen, a copy screen, a transmission screen, and a job history screen.

A third detector 53, for detecting a person located in the proximity of the image forming apparatus 1, is provided on the front side of the image forming apparatus 1. The third detector 53 is a human sensor. The human sensor may be a known device, for example an image-based human sensor including an infrared sensor and a CCD image sensor, and configured to detect the number of persons and the positions of the respective persons, through the analysis of the image data acquired by the CCD image sensor. In this embodiment, the third detector 53 is exemplified by the image-based human sensor, and the third detector 53 outputs detection information indicating the detection result, namely the number of persons and the positions of the respective persons, to the control device 20. In this embodiment, a predetermined detection range R is defined in front of the image forming apparatus 1, and the third detector 53 detects the person(s) located inside the detection range R.

A fourth detector 54, for detecting the gaze line of the person detected by the third detector 53, is provided on the upper face of the operation device 10 of the image forming apparatus 1. The fourth detector 54 is a gaze line sensor. The gaze line sensor may be a known device, for example a non-contact gaze line sensor based on cornea reflection. In this embodiment, the fourth detector 54 includes a light source that emits near-infrared ray to the user's eye, more specifically the cornea, and a camera for shooting the motion of the eyeball that creates the cornea reflection. The fourth detector 54 outputs the image data acquired by the camera, to the control device 20.

Fig. 2 is a block diagram schematically showing an internal configuration of the image forming apparatus shown in Fig. 1. The image forming apparatus 1 includes the control device 20. The control device 20 includes a processor, a random-access memory (RAM), and a read-only memory (ROM). The processor is, for example, a central processing unit (CPU), a micro processing unit (MPU), or an application specific integrated circuit (ASIC). The control device 20 acts as the controller 21, a switching operation decider 22, and a condition establishment decider 23.

The control device 20 is configured to act as the controller 21, the switching operation decider 22, and the condition establishment decider 23, when the processor operates according to the control program stored in a hard disk drive (HDD) 41. Here, the controller 21 and the mentioned components may be constituted in the form of a hardware circuit, instead of being realized by the operation of the control device 10 according to the control program. This also applies to other embodiments, unless otherwise specifically noted.

The control device 20 is electrically connected to the document feeding device 5, the image reading device 3, the image forming device 31, the fixing device 32, the sheet feeding device 4, the operation device 10, the first detector 51, the second detector group 52, the third detector 53, the fourth detector 54, an image processing device 33, an image memory 34, the HDD 41, a facsimile communication device 42, and a network interface (I/F) 43. The controller 21 serves to control the overall operation of the image forming apparatus 1.

The image processing device 33 includes an image processing circuit, and executes image processing, as necessary, with respect to the image data acquired by the image reading device 3.

The image memory 34 includes a region for temporarily storing the image data acquired by the image reading device 3. For example, the image memory 34 temporarily stores the image data to be formed into an image by the image forming device 31.

The HDD 41 is a large-capacity storage device for storing various types of data, including the image data read by the image reading device 3. The HDD 41 also contains various computer programs, such as the control program for realizing the function of the image forming apparatus 1. In this embodiment, the control program includes a display mode switching program, for switching a display form of a password, to be subsequently described, between a first display mode including substituting the elements constituting the password (e.g., characters, symbols, and numerals) with turned letters (e.g., "**●**" or "*"), thereby displaying the password in a first display form that restricts the content of the password from being visually recognized, and a second display mode including displaying the password in a second display form that enables the content of the password to be visually recognized, by displaying the elements constituting the password as they are. The first display form will hereinafter be referred to as "masked display form", and the first display mode will be referred to as "masked display mode", where appropriate. In addition, the second display form will hereinafter be referred to as "express display form", and the first second display mode will be referred to as "express display mode", where appropriate.

The facsimile communication device 42 is a facsimile communication mechanism that makes connection with the public telephone network, to transmit or receive the image data, through the public telephone network.

The network I/F 43 serves as the interface with a LAN or the internet. The controller 21 performs data communication with an information processing apparatus on the LAN or the internet, such as the personal computer 44, through the network I/F 43.

Each of the components of the image forming apparatus 1 is connected to a non-illustrated power source, so that those components of the image forming apparatus 1 operate, with the power supplied from the power source. In this embodiment, the control device 20 controls the power supply to each of the components of the image forming apparatus 1. For example, the control device 20 disconnects or limits the power supply to the components of the image forming apparatus 1, when a predetermined condition has been established, such as when the image forming operation has not been executed for a predetermined period of time, to shift the status of the image forming apparatus 1 to a state where the power consumption is reduced (hereinafter, "power-saving mode"). Conversely, when another predetermined condition has been established, such as when an instruction is inputted to the operation device 10, the control device 20 cancels the power-saving mode, to enable the image forming apparatus 1 to promptly perform the operation to realize the functions granted thereto.

As described above, the control device 20 acts as the controller 21, the switching operation decider 22, and the condition establishment decider 23, when the processor operates according to the control programs, including the display mode switching program.

The controller 21 controls the overall aspects of the display mode switching operation, performed according to the display mode switching program. The controller 21 causes the display device 11 to display a screen including a region (e.g., password input box) for displaying the information inputted to the operation device 10 (e.g., password), and switches the display mode of the information in the region, between the masked display mode, in which the information is displayed in the masked display form that restricts the content of the information from being visually recognized, and the express display mode in which the information is displayed in the express display form that enables the content of the information to be visually recognized. The switching operation decider 22 decides whether one of a first switching operation for switching the display mode in the region from the masked display mode to the express display mode, and a second switching operation for switching the display mode in the region from the express display mode to the masked display mode, has been performed. The condition establishment decider 23 decides whether a specific mode-switching condition, different from a mode-switching condition specifying that the second switching operation has been performed, has been established.

When the switching operation decider 22 decides that the first switching operation has been performed, while the masked display mode is set in the region, the controller 21 switches the display mode of the region from the masked display mode to the express display mode. Likewise, when the switching operation decider 22 decides that the second switching operation has been performed, while the express display mode is set in the region, the controller 21 switches the display mode of the region from the express display mode to the masked display mode. In addition, when the condition establishment decider 23 decides that the specific switching condition has been established, while the express display mode is set in the region, the controller 21 switches the display mode of the region from the express display mode to the masked display mode.

Hereinafter, the first switching operation will be referred to as "switching operation from masked display to express display", and the second switching operation will be referred to as "switching operation from express display to masked display", where appropriate.

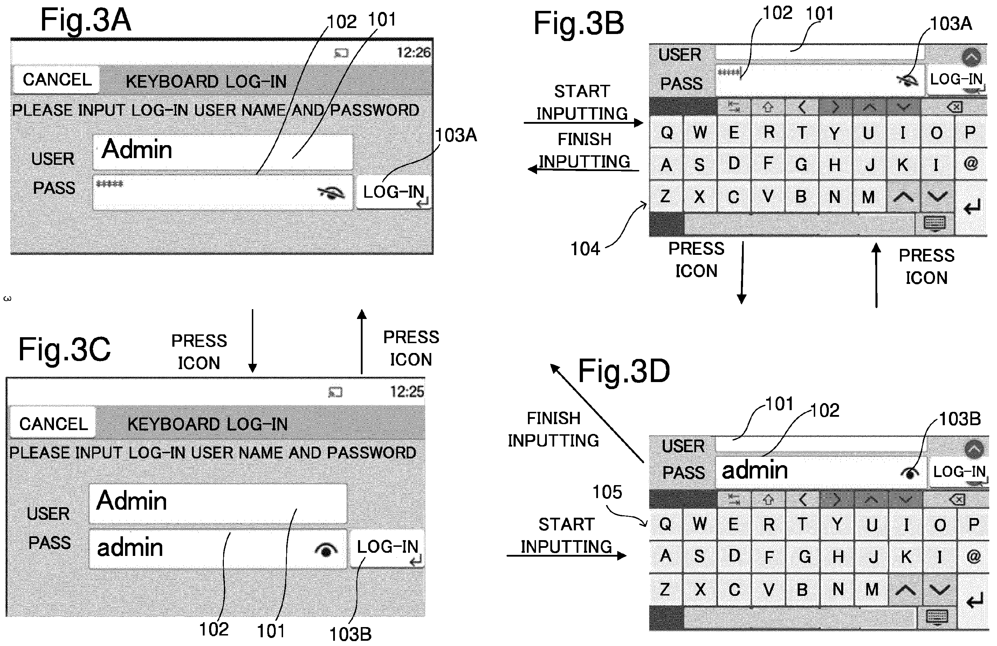

Fig. 3A to Fig. 3D are schematic drawings showing screen transitions, for explaining the display mode switching operation performed by the control device 20. Fig. 3A to Fig. 3D each show a log-in screen displayed on the display device 11 shown in Fig. 1 and Fig. 2.

Figs. 3A and 3B each illustrate an example of a log-in screen in the masked display mode, in which the password is displayed in the masked display form. The controller 21 causes the display device 11 to display a log-in user name input box 101 and a password input box 102 in the log-in screen of Fig. 3A, with an icon 103A displayed in the password input box 102. The icon 103A indicates that the password is displayed in the masked display mode, and is used for inputting the instruction of "switching operation from masked display to express display", for switching the display mode of the password from the masked display mode to the express display mode. The log-in screen of Fig. 3B, which is also displayed under the control of the controller 21, includes a software keyboard 104 overlaid on the log-in screen of Fig. 3A. Hereinafter, the password displayed in the masked display form in the masked display mode will be referred to as "mask-displayed password", and the icon 103A will be referred to as "masked display notice icon 103A", where appropriate.

Figs. 3C and 3D each illustrate an example of a log-in screen in the express display mode, in which the password is displayed in the express display form. The controller 21 causes the display device 11 to display the log-in user name input box 101 and the password input box 102 in the log-in screen of Fig. 3C, with an icon 103B displayed in the password input box 102. The icon 103B indicates that the password is displayed in the express display mode, and is used for inputting the instruction of "switching operation from express display to masked display", for switching the display mode of the password from the express display mode to the masked display mode. The log-in screen of Fig. 3D, which is also displayed under the control of the controller 21, includes the software keyboard 104 overlaid on the log-in screen of Fig. 3C. Hereinafter, the password displayed in the express display form in the express display mode will be referred to as "express-displayed password", and the icon 103B will be referred to as "express display notice icon 103B", where appropriate.

When the user presses the position corresponding to the masked display notice icon 103A, on the touch panel of the operation device 10, in the log-in screen of Fig. 3A, the operation device 10 detects the coordinate of the pressed position on the touch panel, and outputs a detection signal indicating the coordinate of the pressed position, to the control device 20. The switching operation decider 22 of the control device 20 decides whether the "switching operation from masked display to express display" has been performed, on the basis of the coordinate of the pressed position indicated by the detection signal. In this case, the switching operation decider 22 decides that the "switching operation from masked display to express display" has been performed. In accordance with such decision, the controller 21 switches the display mode of the password from the masked display mode to the express display mode, and causes the display device 11 to display the express-displayed password in the password input box 102, and the express display notice icon 103B in the password input box 102, in the log-in screen of Fig. 3C.

When the user presses the position corresponding to the masked display notice icon 103A, on the touch panel of the operation device 10, in the log-in screen of Fig. 3B, the controller 21 switches, like when the position corresponding to the masked display notice icon 103A has been pressed in the log-in screen of Fig. 3A, the display mode of the password from the masked display mode to the express display mode, and causes the display device 11 to display the express-displayed password in the password input box 102, and the express display notice icon 103B in the password input box 102, in the log-in screen of Fig. 3D.

When the user presses the position corresponding to the express display notice icon 103B, on the touch panel of the operation device 10, in the log-in screen of Fig. 3C, the operation device 10 detects the coordinate of the pressed position on the touch panel, and outputs a detection signal indicating the coordinate of the pressed position, to the control device 20. The switching operation decider 22 of the control device 20 decides whether the "switching operation from express display to masked display" has been performed, on the basis of the coordinate of the pressed position indicated by the detection signal. In this case, the switching operation decider 22 decides that the "switching operation from express display to masked display" has been performed. In accordance with such decision, the controller 21 switches the display mode of the password from the express display mode to the masked display mode, and causes the display device 11 to display the mask-displayed password in the password input box 102, and the masked display notice icon 103A in the password input box 102, in the log-in screen of Fig. 3A.

When the user presses the position corresponding to the express display notice icon 103B, on the touch panel of the operation device 10, in the log-in screen of Fig. 3D, the controller 21 switches, like when the position corresponding to the express display notice icon 103B has been pressed in the log-in screen of Fig. 3C, the display mode of the password from the express display mode to the masked display mode, and causes the display device 11 to display the mask-displayed password in the password input box 102, and the masked display notice icon 103A in the password input box 102, in the log-in screen of Fig. 3B.

When the user presses the software keyboard display icon on the touch panel of the operation device 10, in the log-in screen of Fig. 3C, although the controller 21 switches the screen of the display device 11 from the log-in screen of Fig. 3C to the log-in screen of Fig. 3D, covered with the software keyboard 104, the display mode of the password remains unchanged from the masked display mode. Likewise, when the user presses a software keyboard display icon (e.g., "keyboard log-in" in Fig. 3A) on the touch panel of the operation device 10, in the log-in screen of Fig. 3A, although the screen of the display device 11 is switched from the log-in screen of Fig. 3A to the log-in screen of Fig. 3B, covered with the software keyboard 104, the display mode of the password remains unchanged from the express display mode.

Although not shown, the software keyboard 104 includes an icon for receiving the instruction to erase the display of the software keyboard (hereinafter, "software keyboard erase icon" where appropriate). When the user presses the position corresponding to the software keyboard erase icon on the touch panel of the operation device 10, in the log-in screen of Fig. 3D, the operation device 10 detects the coordinate of the pressed position on the touch panel, and outputs a detection signal indicating the coordinate of the pressed position, to the control device 20. The condition establishment decider 23 decides whether the display of the software keyboard 104 has been erased, on the basis of the coordinate of the pressed position indicated by the detection signal. In this case, the condition establishment decider 23 decides that the display of the software keyboard 104 has been erased, and the controller 21 switches the display mode of the password from the express display mode to the masked display mode, and causes the display device 11 to display the mask-displayed password in the password input box 102, and the masked display notice icon 103A in the password input box 102, in the log-in screen of Fig. 3A. Here, deciding whether the display of the software keyboard 104 has been erased is an example of a method to decide whether the input of the password in the password input box 102 has finished. Accordingly, the method to decide whether the input of the password in the password input box 102 has finished is not limited to the above, and a desired method may be adopted, provided that the method enables the user to decide whether the input of the password has finished.

When the user presses the position corresponding to the software keyboard erase icon on the touch panel of the operation device 10, in the log-in screen of Fig. 3B, although the controller 21 switches the screen of the display device 11 from the log-in screen of Fig. 3B to the log-in screen of Fig. 3A, the display mode of the password remains unchanged from the masked display mode.

When the user presses the position corresponding to the log-in user name input box 101, different from the password input box 102, on the touch panel of the operation device 10, in the log-in screen of Fig. 3C, the operation device 10 detects the coordinate of the pressed position on the touch panel, and outputs a detection signal indicating the coordinate of the pressed position, to the control device 20. The condition establishment decider 23 decides whether the log-in user name input box 101 has been pressed, on the basis of the coordinate of the pressed position indicated by the detection signal. In this case, the condition establishment decider 23 decides that the log-in user name input box 101 has been pressed, and the controller 21 switches the display mode of the password from the express display mode to the masked display mode. Likewise, when the user presses the position corresponding to the log-in user name input box 101, different from the password input box 102, on the touch panel of the operation device 10, in the log-in screen of Fig. 3D, the controller 21 switches the display mode of the password from the express display mode to the masked display mode.

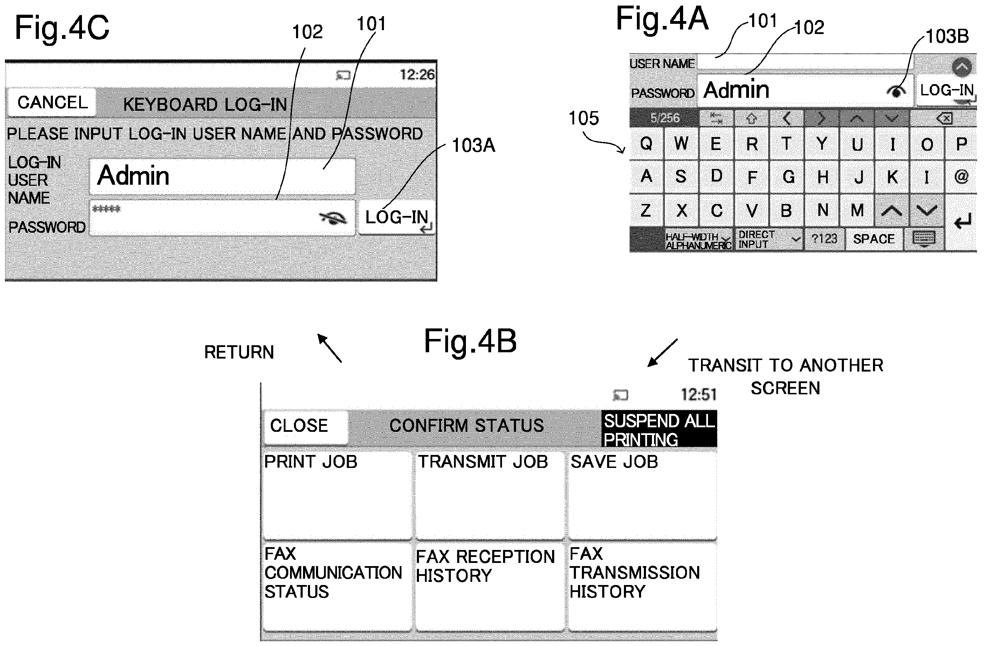

Fig. 4A to Fig. 4C are schematic drawings showing screen transitions, for explaining another specific example of the display mode switching operation, performed by the control device 20. Fig. 4A and Fig. 4C each show an example of the log-in screen displayed on the display device 11 shown in Fig. 1 and Fig. 2. Fig. 4B shows an example of a status screen displayed on the display device 11 shown in Fig. 1 and Fig. 2.

When the log-in screen of Fig. 4A is displayed, the controller 21 switches the screen of the display device 11 from the log-in screen to another screen different from the log-in screen, such as a status screen. The condition establishment decider 23 decides whether the log-in screen has been switched to a different screen, on the basis of the display control performed by the controller 21 with respect to the display device 11. In this case, the condition establishment decider 23 decides that the log-in screen has been switched, and the controller 21 switches the display mode of the password from the express display mode to the masked display mode.

When the status screen of Fig. 4B is returned to the log-in screen of Fig. 4C, the display mode of the password has been switched to the masked display mode. Accordingly, the controller 21 causes the display device 11 to display the mask-displayed password in the password input box 102 in the log-in screen of Fig. 4C, together with the masked display notice icon 103A.

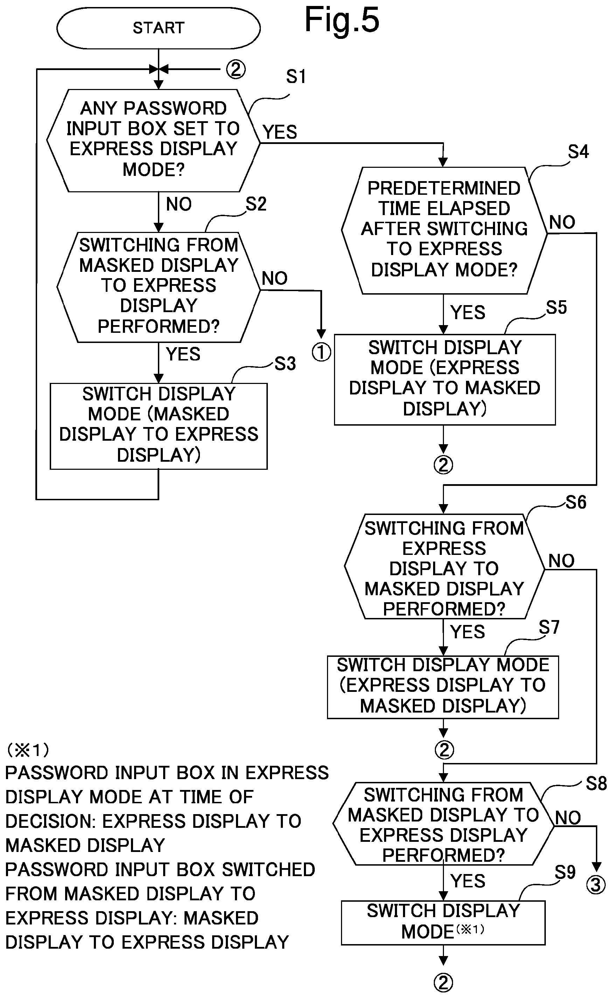

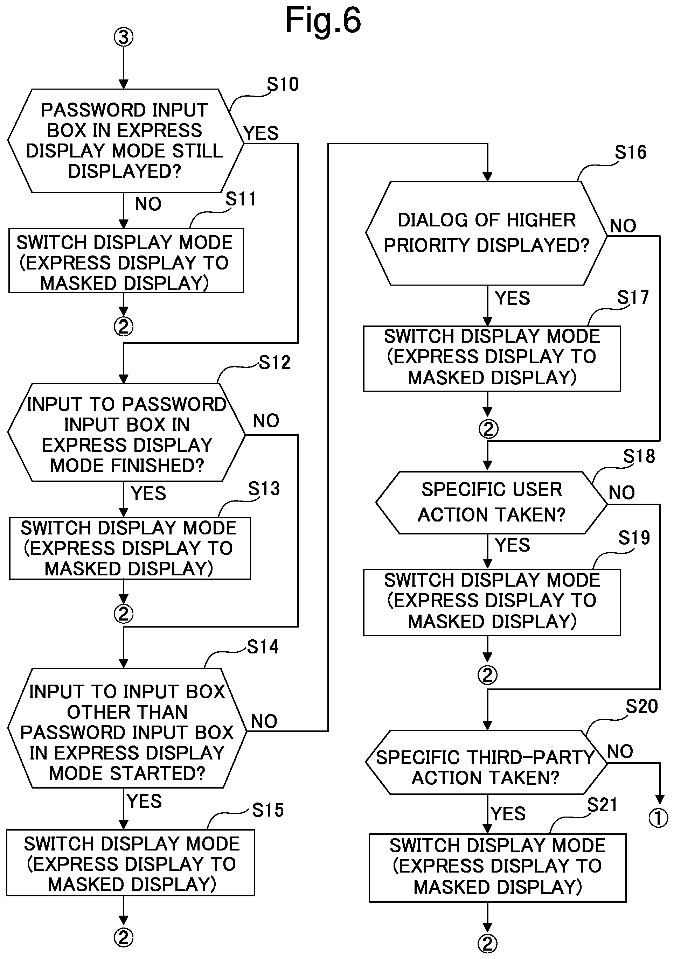

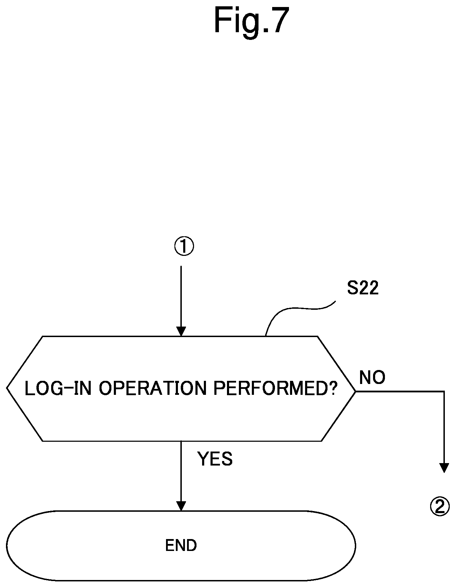

Hereunder, the display mode switching operation and a display mode switching method, performed by the image forming apparatus 1, will be described. Fig. 5 to Fig. 7 are flowcharts each showing the display mode switching operation, performed by the image forming apparatus 1.

There are cases where the controller 21 causes the display device 11 to display a plurality of password input boxes, in which the display mode of the password can be switched between the masked display mode and the express display mode. When inputting the password in each of the plurality of password input boxes, the user sequentially inputs the password, starting from one of the plurality of password input boxes. Accordingly, when a plurality of password input boxes, in which the display mode of the password can be switched between the masked display mode and the express display mode, are displayed on the screen of the display device 11, it suffices that the password input box, in which the password is being inputted, is set to the express display mode. Therefore, the controller 21 restricts two or more password input boxes from being set to the express display mode at the same time.

The controller 21 decides whether any of the password input boxes is set to the express display mode, on the basis of the display mode of the password set in the input box (step S1).

When the controller 21 decides that none of the password input boxes is set to the express display mode (NO at S1), the switching operation decider 22 decides whether the "switching operation from masked display to express display" has been performed with respect to the password input box set to the masked display mode, on the basis of the coordinate of the pressed position on the touch panel of the operation device 10 (step S2). When the switching operation decider 22 decides that the "switching operation from masked display to express display" has been performed (YES at S2), the controller 21 switches the display mode of the password in the password input box where the "switching operation from masked display to express display" has been performed, from the masked display mode to the express display mode (step S3).

The specific switching conditions stored in the controller 21 include a condition that a predetermined time has elapsed, after the display mode of the password in the password input box is switched from the masked display mode to the express display mode. The predetermined time is set by the controller 21, for example, to the time necessary for the user to confirm the password. In this case, the password can be immediately switched to the masked display form, after the user has confirmed the password, and therefore the security level of the password can be improved.

The control device 20 includes a built-in timer. When the controller 21 decides that one of the password input boxes is set to the express display mode (YES at S1), the condition establishment decider 23 decides, with respect to the password input box set to the express display mode, whether the predetermined time has elapsed after the express display mode was set, on the basis of the count value of the timer (step S4). When the condition establishment decider 23 decides that the predetermined time has elapsed after the express display mode was set (YES at S4), the controller 21 switches the display mode of the password in the password input box, in which the predetermined time has elapsed after the express display mode was set, from the express display mode to the masked display mode (step S5).

When the condition establishment decider 23 decides that the predetermined time has not elapsed after the express display mode was set (NO at S4), the switching operation decider 22 decides whether the "switching operation from express display to masked display" has been performed with respect to the password input box set to the express display mode, on the basis of the coordinate of the pressed position on the touch panel, inputted from the operation device 10 (step S6). When the switching operation decider 22 decides that the "switching operation from express display to masked display" has been performed (YES at S6), the controller 21 switches the display mode of the password in the password input box, to which the "switching operation from express display to masked display" has been performed, from the express display mode to the masked display mode (step S7).

There are cases where the password input box set to the express display mode, and the password input box set to the masked display mode are both displayed on the screen of the display device 11. At step S8 described hereunder, the decision is made with respect to the password input box set to the masked display mode. Upon deciding that the "switching operation from express display to masked display" has not been performed (NO at S6), the switching operation decider 22 decides whether the "switching operation from masked display to express display" has been performed, with respect to the password input box set to the masked display mode, on the basis of the coordinate of the pressed position on the touch panel, inputted from the operation device 10 (step S8). When the switching operation decider 22 decides that the "switching operation from masked display to express display" has been performed (YES at S8), the controller 21 switches the display mode of the password in the password input box, set to the express display mode at the time that the decision of step S8 has been made, from the express display mode to the masked display mode, and switches the display mode of the password in the password input box, to which the "switching operation from masked display to express display" has been performed, from the masked display mode to the express display mode (step S9).

The specific switching conditions stored in the controller 21 also include a condition that, when the password input box is set to the express display mode, the "switching operation from masked display to express display" has been performed with respect to another password input box. The mentioned operations of step S8 and step S9 are performed under such specific switching condition.

The specific switching conditions stored in the controller 21 also include a condition that, when the password input box is set to the express display mode, this password input box has disappeared from the screen of the display device 11. Specific examples of the case where the password input box set to the express display mode disappears from the screen of the display device 11 include the case where the password input box set to the express display mode has moved to outside of the screen of the display device 11, as result of a scrolling action of the screen display, the case where the screen of the display device 11 has been shifted to another screen not including the password input box set to the express display mode, such as the status screen, and the case where the display of the password input box itself has been erased, owing to a change in setting related to the password input box set to the express display mode. When the password input box set to the express display mode disappears from the screen, it can be assumed that the user has proceeded to another operation, after finishing the confirmation of the password. Accordingly, displaying the password in the masked display form, when the password input box is again displayed in the screen, after the user has proceeded to another operation, after the confirmation of the password, leads to improved security level of the password.

When the switching operation decider 22 decides that the "switching operation from masked display to express display" has not been performed (NO at S8), the condition establishment decider 23 decides whether the password input box set to the express display mode still remains displayed on the screen of the display device 11 (step S10). For example, the decision whether the password input box set to the express display mode has moved to outside of the screen of the display device 11, as result of a scrolling action of the screen of the display device 11, is made on the basis of the image data of the image displayed on the display device 11. The decision whether the screen displaying the password input box set to the express display mode has been shifted to another screen is made, for example, on the basis of the instruction to display the other screen. The decision whether the display of the password input box itself has been erased, owing to a change in setting related to the password input box set to the express display mode, is made, for example, on the basis of the setting realized after the change. When the condition establishment decider 23 decides that the password input box set to the express display mode has disappeared from the screen of the display device 11 (NO at S10), the controller 21 switches the display mode of the password, with respect to the password input box set to the express display mode, which has disappeared from the screen of the display device 11, from the express display mode to the masked display mode (step S11).

The specific switching conditions stored in the controller 21 also include a condition that, when the password input box is set to the express display mode, the input of the password in this password input box has finished. When the input of the password in the password input box set to the express display mode has finished, it can be assumed that the user no longer needs to confirm the password. Accordingly, displaying the password in the masked display form, immediately after the input of the password has finished, leads to improved security level of the password.

The software keyboard includes an icon for erasing the display of the software keyboard (software keyboard erase icon). Upon deciding that the password input box set to the express display mode still remains in the screen of the display device 11 (YES at S10), the condition establishment decider 23 decides whether the input of the password in the password input box set to the express display mode has finished (step S12). Such decision can be made, for example, by deciding whether the software keyboard erase icon has been pressed, on the basis of the coordinate of the pressed position on the touch panel, inputted from the operation device 10. When the condition establishment decider 23 decides that the input of the password in the password input box set to the express display mode has finished (YES at S12), the controller 21 switches the display mode of the password in the password input box set to the express display mode, the input to which has finished, from the express display mode to the masked display mode (step S13).

The specific switching conditions stored in the controller 21 also include a condition that, when the password input box is set to the express display mode, the user has started to input information to another input box, different from the password input box set to the express display mode. When the user starts to input the information to the other input box, it can be assumed that the user is focusing on the inputting action to the other input box. Accordingly, displaying the password in the masked display form, immediately after the user has started to input the information to the other input box, leads to improved security level of the password.

Upon deciding that the input of the password in the password input box set to the express display mode has not finished (NO at S12), the condition establishment decider 23 decides whether the user has started to input information to another input box, different from the password input box set to the express display mode (step S14). Such decision can be made, for example, by deciding whether the other input box has been selected, by a press of the position corresponding to the other input box, other than the password input box set to the express display mode, on the basis of the coordinate of the pressed position on the touch panel, inputted from the operation device 10. When the condition establishment decider 23 decides that the user has started to input the information to another input box, different from the password input box set to the express display mode (YES at S14), the controller 21 switches the display mode of the password, with respect to the password input box set to the express display mode, from the express display mode to the masked display mode (step S15).

The specific switching conditions stored in the controller 21 also include a condition that, when the password input box is set to the express display mode, for example a predetermined dialog, of a higher rank in display priority, is displayed on the screen of the display device 11. When a dialog of higher display priority is displayed, it can be assumed that the user's attention is focused on such dialog. Accordingly, displaying the password in the masked display form, immediately after the dialog of higher display priority is displayed, leads to improved security level of the password.

Upon deciding that the user has not started to input the information to another input box, different from the password input box set to the express display mode (NO at S14), the condition establishment decider 23 decides, when the controller 21 causes the display device 11 to display a dialog in a pop-up form, whether the predetermined dialog of higher display priority has appeared on the screen of the display device 11 (or the position in the screen of the display device 11 overlapping with the password input box 102), through comparison between the pop-up dialog and the predetermined dialog of higher display priority (step S16). When the condition establishment decider 23 decides that the predetermined dialog of higher display priority has appeared on the screen of the display device 11 (YES at S16), the controller 21 switches the display mode of the password, with respect to the password input box set to the express display mode, from the express display mode to the masked display mode (step S17).

The specific switching conditions stored in the controller 21 also include a condition that, when the password input box is set to the express display mode, a predetermined first specific action (hereinafter, "specific user action") has been taken. Specific examples of the specific user action include opening or closing the sheet cassette 8, 9, opening or closing the document feeding device 5, and turning the eyes away from the password input box set to the express display mode. When the specific user action is taken, it can be assumed that the user's attention is not focused on the password displayed in the express display form, in the password input box, and therefore displaying the password in the masked display form, immediately after the specific user action has been taken, leads to improved security level of the password.

Upon deciding that the predetermined dialog of higher display priority has not appeared on the screen of the display device 11 (NO at S16), the condition establishment decider 23 decides whether the specific user action has been taken (step S18). When the specific user action is, for example, opening or closing the sheet cassette 8, 9, the condition establishment decider 23 decides whether the sheet cassette 8, 9 has been opened or closed, on the basis of the detection signal indicating the open or closed state of the sheet cassette 8, 9, inputted from the second detector group 52. When the specific user action is opening or closing the document feeding device 5, the condition establishment decider 23 decides whether the document feeding device 5 has been opened or closed, on the basis of the detection signal indicating the open or closed state of the document feeding device 5, inputted from the first detector 51. When the specific user action is turning the eyes away from the password input box set to the express display mode, the condition establishment decider 23 regards a person located in a predetermined range from the operation device 10 (close to the operation device 10 and narrower than the detection range R) as the user, on the basis of the detection information received from the third detector 53 (information indicating the number of persons and positions of the respective persons), and traces the gaze line of the person regarded as the user, by analyzing the image shot by the camera and inputted from the fourth detector 54, thereby deciding whether the gaze line of the person regarded as the user has been turned away from the password input box set to the express display mode. When the condition establishment decider 23 decides that the specific user action has been taken (YES at S18), the controller 21 switches the display mode of the password, with respect to the password input box set to the express display mode, from the express display mode to the masked display mode (step S19).

The specific switching conditions stored in the controller 21 also include a condition that, when the password input box is set to the express display mode, a predetermined second specific action (hereinafter, "specific third-party action") has been taken. Specific examples of the specific third-party action include coming close to the image forming apparatus 1 and entering the detection range R of the third detector 53, and focusing the eyes on the password input box set to the express display mode. When the specific third-party action is taken, it is highly likely that the password is revealed to the third party. Therefore, displaying the password in the masked display form, immediately after the specific third-party action has been detected, leads to improved security level of the password.

Upon deciding that the specific user action has not been taken (NO at S18), the condition establishment decider 23 decides whether the specific third-party action has been taken (step S20). For example, when the specific third-party action is coming close to the image forming apparatus 1 and entering the predetermined detection range R of the third detector 53, the condition establishment decider 23 decides, on the basis of the detection information received from the third detector 53 (information indicating the number of persons and positions of the respective persons), whether a person to be regarded as the user is located in the predetermined range from the operation device 10 (close to the operation device 10 and narrower than the detection range R), and whether another person has been additionally detected in the detection range. In the case where an additional person has been detected, the condition establishment decider 23 regards the additionally detected person as the third-party person, and decides that such third-party person has come close to the image forming apparatus 1 and entered the detection range R of the third detector 53. When the specific third-party action is focusing the eyes on the password input box set to the express display mode, the condition establishment decider 23 traces the gaze line of the person regarded as the third-party person, by analyzing the image shot by the camera and inputted from the fourth detector 54, thereby deciding whether the gaze line of the third-party person has been focused on the password input box set to the express display mode. When the condition establishment decider 23 decides that the specific third-party action has been taken (YES at S20), the controller 21 switches the display mode of the password, with respect to the password input box set to the express display mode, from the express display mode to the masked display mode (step S21). When the display mode is switched from the express display mode to the masked display mode, because of having detected the third-party action with the human sensor or gaze line detection, a notice to the effect that the display mode has been switched from the express display mode to the masked display mode, because of having detected the third-party action, may be made to the user.

When the switching operation decider 22 decides that the "switching operation from masked display to express display" has not been performed (NO at S2), or when the condition establishment decider 23 decides that the specific third-party action has not been taken (NO at S20), the controller 21 decides whether a log-in operation has been performed, on the basis of the coordinate of the pressed position on the touch panel, inputted from the operation device 10 (step S22). Upon deciding that the log-in operation has been performed (YES at S22), the controller 21 finishes the display mode switching operation, specified in Fig. 5 to Fig. 7. Upon deciding, in contrast, that the log-in operation has not been performed (NO at S22), the controller 21 returns to step S1.

According to the foregoing embodiment, when the password is displayed in the masked display form that restricts the content of the password from being visually recognized, the user can perform the "switching operation from masked display to express display" thereby switching the masked display mode to the express display mode, so that the password is displayed in the express display form that allows the content of the password to be confirmed. Therefore, the user is enabled to confirm the password, which leads to improved convenience to the user.

In addition, when the password is displayed in the express display form that allows the content of the password to be visually recognized, the display mode is switched from the express display mode to the masked display mode, provided that the specific switching condition is established, despite the "switching operation from express display to masked display" not having been performed by the user, so that the password is displayed in the masked display form that restricts the content of the password from being visually recognized. Such an arrangement shortens the time during which an unspecified person can view the password, thereby improving the security level of the password.

Here, the invention may be modified in various manners, without limitation to the foregoing embodiment.

For example, the image forming apparatus 1 may include a notification mechanism, which outputs a sound or vibrates the operation device 10, in addition to the notification mechanism (masked display notice icon 103A, express display notice icon 103B) for notifying that the display mode of the password is switched through the display mode switching operation according to the embodiment.

Although the switching operation of the display mode of the password is performed through the touch panel, according to the embodiment, the invention is not limited to such embodiment. For example, a hardware key may be employed, such that the switching operation of the display mode of the password can be performed by holding down the hardware key.

According to the embodiment, it is restricted that two or more password input boxes are set to the express display mode at the same time, when a plurality of password input boxes, switchable between the masked display mode and the express display mode, are displayed on the screen of the display device 11. However, the invention is not limited to such embodiment. For example, the controller 21 may allow two or more password input boxes to be set to the express display mode at the same time. The controller 21 may permit two password input boxes to be set to the express display mode, only with respect to two password input boxes for inputting the same password, one for inputting the intended password, and the other for inputting the same password for the purpose of confirmation. For example, in the case where the password input box, set to the express display mode at the time that the decision of step S8 was made, is permitted to be set to the express display mode at the same time as the password input box to which the "switching operation from masked display to express display" has been performed at step S9, the controller 21 keeps from updating the setting of the display mode of the password (maintain the express display mode), with respect to the password input box, set to the express display mode at the time that the decision of step S8 was made, but switches, in other cases, the display mode of the password with respect to the password input box, set to the express display mode at the time that the decision of step S8 was made, from the express display mode to the masked display mode, and switches the display mode of the password with respect to the password input box to which the "switching operation from masked display to express display" has been performed, from the masked display mode to the express display mode.

In the foregoing embodiment, for example, the controller 21 may be additionally configured to perform a clearing operation, including clearing the password information already inputted to the password input box, when a predetermined clearing condition is established, and restricting the password information already inputted to the password input box from being displayed in the password input box, after the predetermined clearing condition is established. The predetermined clearing conditions stored in the controller 21 may include, for example, a condition that a situation has arisen that indicates that the user has finished or suspended the use of the image forming apparatus 1.

Specific examples of the clearing condition stored in the controller 21 include a condition that panel reset has been performed. For example, a reset button for resetting the panel is displayed on the log-in screen of the display device 11. The controller 21 decides whether the reset button has been pressed, on the basis of the coordinate of the pressed position on the touch panel, inputted from the operation device 10, and clears the password information already inputted to the password input box, upon deciding that the reset button has been pressed.

The specific examples of the clearing condition stored in the controller 21 include, in addition to or instead of the mentioned clearing condition, a condition that the image forming apparatus 1 has entered the power-saving mode. For example, the controller 21 monitors whether the image forming apparatus 1 has entered the power-saving mode, and clears the password information already inputted to the password input box, upon detecting that the image forming apparatus 1 has entered the power-saving mode.

The specific examples of the clearing condition stored in the controller 21 include, in addition to or instead of the mentioned clearing condition, a condition that remote panel connection or remote panel disconnection has been performed. For example, a device that can be connected to the image forming apparatus 1, via a LAN or the internet (in this example, the personal computer 44) makes connection to the image forming apparatus 1 using the browser, and an operation for remote panel connection is performed, to display the touch panel screen of the display device 11 of the image forming apparatus 1 (device panel), on the screen of the display device of the personal computer 44 (remote panel). The controller 21 of the image forming apparatus 1 monitors whether the remote panel connection has been performed, and clears the password information already inputted to the password input box, upon detecting that the remote panel connection has been performed. On the part of the personal computer 44, an operation for finishing the remote panel connection (remote panel disconnection) is also performed. The controller 21 of the image forming apparatus 1 monitors whether the remote panel disconnection has been performed, and clears the password information already inputted to the password input box, upon detecting that the remote panel disconnection has been performed.

The specific examples of the clearing condition stored in the controller 21 include, in addition to or instead of the mentioned clearing condition, a condition that the user has moved away from the vicinity of the image forming apparatus 1 (e.g., moved away from the detection range R of the third detector 53). For example, the controller 21 decides whether the user has moved away from the detection range R, on the basis of the detection signal inputted from the third detector 53, and clears the password information already inputted to the password input box, upon deciding that the user has moved away from the detection range R.

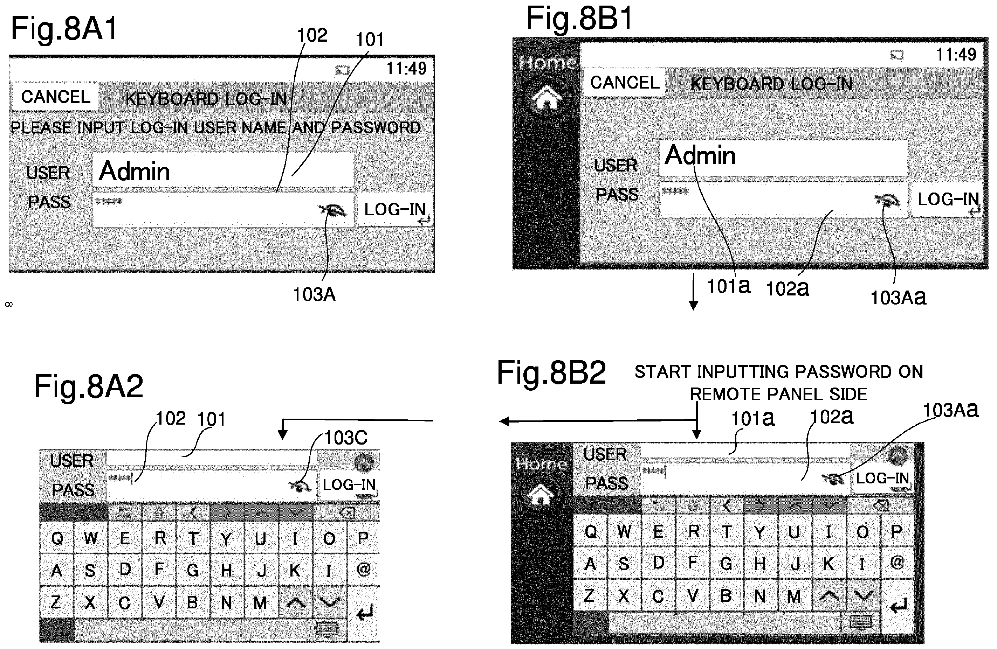

In the foregoing embodiment, for example, the controller 21 may be additionally configured to perform a switch limiting operation, for restricting the switching operation of the display mode of the password, with respect to the device panel and the remote panel. For example, the controller 21 causes the display device 11 of the image forming apparatus 1 to display the device panel for logging in, including the log-in user name input box and the password input box, and the controller of the personal computer 44, connected to the image forming apparatus 1 via the LAN or internet, causes the display device to display the remote panel for logging in, including the log-in user name input box and the password input box. The controller 21 transmits the screen data of the remote panel for logging in, and the display instruction of the screen data, to the controller of the personal computer 44 via the network I/F 43, and the controller of the personal computer 44 causes the display device to display the remote panel for logging in using the screen data, according to the display instruction. The controller 21 can switch the display mode of the password between the masked display mode and the express display mode, in the password input box of each of the device panel and the remote panel. In such a case, when the user starts to input the password to the password input box of one of the device panel and the remote panel, the controller 21 may set the password input box, of the panel to which the password has been inputted first, to a switchable state that accepts the switching operation of the display mode of the password, and set the password input box of the other panel to an unswitchable state that rejects the switching operation of the display mode of the password. A specific example of the above will be described, with reference to Fig. 8.

Fig. 8A1 represents the device panel, and Fig. 8B1 represents the remote panel. The device panel includes the log-in user name input box 101 and the password input box 102, and the masked display notice icon 103A is displayed in the password input box 102. The remote panel includes a log-in user name input box 101a and a password input box 102a, and a masked display notice icon 103Aa is displayed in the password input box 102a. At this stage, the respective password input boxes of the device panel and the remote panel are both set to the switchable state, which accepts the switching operation of the display mode of the password.

It will be assumed here that the input of the password to the password input box 102a has started on the side of the remote panel, earlier than on the side of the device panel. The controller of the personal computer 44 transmits, upon receipt of the user's instruction designating the password input box 102a inputted through the operation device, a password input start signal indicating that the input to the password input box 102a has started, to the image forming apparatus 1. On the side of the remote panel, the password input box 102a is maintained in the switchable state, and the masked display icon 103Aa continues to be displayed in the password input box 102a. Fig. 8B2 represents the remote panel, in which two characters of the password have been inputted to the password input box 102a. On the side of the remote panel, the user can switch the display mode of the password from the masked display mode to the express display mode, by pressing the masked display icon 103Aa, even after starting to input the password first, and also switch the display mode of the password from the express display mode to the masked display mode, by pressing a non-illustrated express display icon.

On the side of the image forming apparatus 1, the controller 21 of the control device 20 switches, upon receipt of the password input start signal from the personal computer 44, the password input box 102 from the switchable state to the unswitchable state, on the basis of the password input start signal received, and displays an icon 103C, notifying that the display mode of the password is unable to be switched, and the pressing operation of which is invalid, in the password input box 102a. Fig. 8A2 represents the device panel, in which two characters of the password have been inputted to the password input box 102. Here, the display of the icon 103C may be omitted. On the side of the device panel, after the input of the password started first on the side of the remote panel, the user is unable to switch the display mode of the password from the masked display mode to the express display mode, or from the express display mode to the masked display mode, by the user's own operation.

According to the foregoing embodiment, the password is switched between the express display form and the masked display form in its entirety. However, the invention is not limited to such embodiment. For example, a part of the password may be switched between the express display form and the masked display form. Examples of the case where the display form of a part of the password is switched include the case where a password already registered is to be displayed, and the case where the elements for constituting the password are to be additionally inputted, on top of the password already inputted. The part of the password, the display form of which is to be switched, may be a few characters at the tail end in the former case, and the additionally inputted portion in the latter case.

Although the information, the display form of which is to be switched between the express display form and the masked display form, is exemplified by the password in the embodiment, the invention is not limited to such embodiment. For example, the information the display form of which is to be switched between the express display form and the masked display form may be a mail address, or a credit card number. In the case of the mail address for example, the portion to be switched between the masked display form and the express display form may be the entirety of the mail address, or a part thereof (e.g., portion preceding @, i.e., other than the domain name). In the case of the credit card number, the portion to be switched between the masked display form and the express display form may be the entirety of the card number, or a part thereof (e.g., portion other than the last four digits).

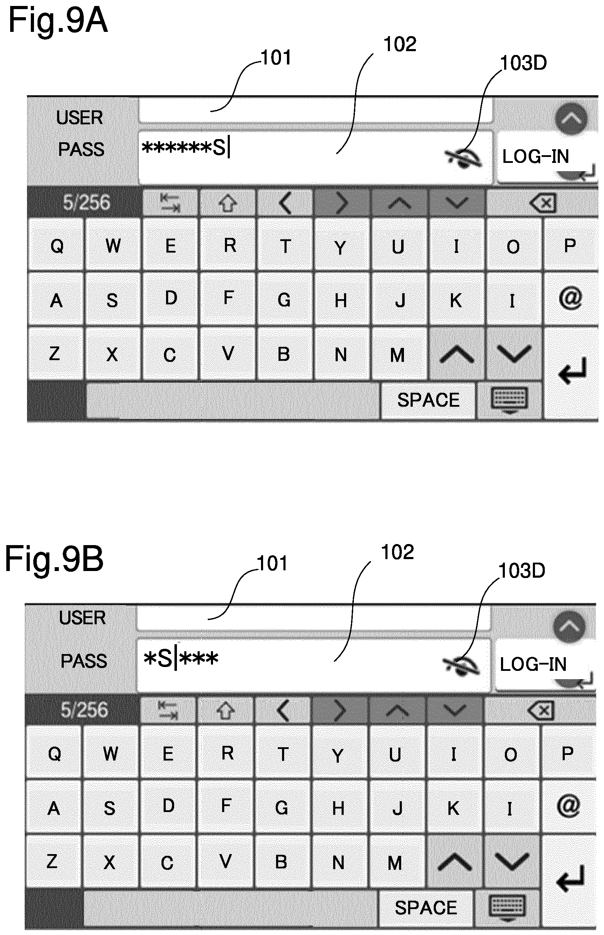

In the foregoing embodiment, for example, the controller 21 may adopt the following display mode. In the case where some elements of the password already inputted to the password input box 102 are displayed in turned letters, when the controller 21 decides that an element has been newly inputted, on the basis of the signal inputted from the operation device 10, the controller 21 may display the newly inputted element as it is, and then convert the newly inputted element to the turned letter, for example when a predetermined time has elapsed after a next new element was inputted or displayed. Fig. 9A illustrates an example of the screen to which an element "s" has been newly inputted. Alternatively, in the case where some elements of the password already inputted to the password input box 102 are displayed in turned letters, the controller 21 may switch, upon deciding that the cursor has been moved on the basis of the signal inputted from the operation device 10, the display of the element immediately preceding the cursor from the turned letter to the element itself, and then again convert the element to the turned letter, when a predetermined time has elapsed after the turned letter was switched to the element itself. Fig. 9B illustrates an example of the screen, in which the cursor has been moved to the position between the second and third elements, so that the second element is displayed as "s" instead of the turned letter. Here, the icon 103D in Figs. 9A and 9B indicates that the display form of a part of the password already inputted to the password input box 102 is switchable. In the foregoing embodiment, the mentioned display mode may be adopted instead of the express display mode, or instead of the masked display mode, and the display mode may be set to be switched by a press of the icon 103D.

In the case of the existing information display devices, once the display mode is switched from the first display mode to the second display mode, the password continues to be visibly displayed, until the user presses the second switch icon. Therefore, the security of the password is insufficient. This also applies to all types of information of high importance, not only the password. The arrangement according to the foregoing embodiment, in contrast, facilitates the user to confirm the information, thereby improving the convenience to the user, and shortens the time during which the information can be viewed, thereby improving the security level of the information.

According to the embodiment, to be more specific, when the information is displayed in the first display form that restricts the information from being visually recognized, the display can be switched to the second display form that enables the information to be visually recognized, by the first switching operation performed by the user. In addition, when the information is displayed in the second display form that enables the information to be visually recognized, the display can be switched to the first display form that restricts the information from being visually recognized, provided that the specific switching condition is established, despite the user not having performed the second switching operation. Therefore, the information can be made visible when the user selects the second display form, which leads to improved convenience to the user, and the time during which an unspecified person can view the information can be shortened, which leads to improved security level of the information.

Although the information processing apparatus is exemplified by the image forming apparatus 1 in the foregoing embodiment, the invention is not limited to such embodiment. The information processing apparatus may be, for example, a personal computer or a communication device.

Further, the configurations and processings according to the embodiment described with reference to Fig. 1 to Fig. 7, and the variations described with reference to Fig. 8 and Fig. 9, are merely exemplary, and in no way intended to limit the invention to those configurations and processings.

## Claims

1. An information processing apparatus (1) comprising:
an operation device (10) to which information is inputted by a user;
a display device (11);
a controller (21) that causes the display device (11) to display a screen including a region for displaying the information inputted to the operation device (10), and switches setting of a display mode of the information in the region, between a first display mode, including displaying the information in a first display form that restricts a content of the information from being visually recognized, and a second display mode, including displaying the information in a second display form that enables the content of the information to be visually recognized;
a switching operation decider (22) that decides whether one of a first switching operation, for switching the display mode on the region from the first display mode to the second display mode, and a second switching operation, for switching the display mode on the region from the second display mode to the first display mode, has been performed through the operation device (10); and
a condition establishment decider (23) that decides whether a specific switching condition, different from a switching condition specifying that the second switching operation has been performed, has been established,
wherein the controller (21) is configured to:
switch the setting of the display mode in the region from the first display mode to the second display mode, when the switching operation decider (22) decides that the first switching operation has been performed, while the first display mode is set in the region;
switch the setting of the display mode in the region from the second display mode to the first display mode, when the switching operation decider (22) decides that the second switching operation has been performed, while the second display mode is set in the region; and
switch the setting of the display mode in the region from the second display mode to the first display mode, when the condition establishment decider (23) decides that the specific switching condition has been established, while the second display mode is set in the region.

2. The information processing apparatus (1) according to claim 1,
wherein the controller (21) switches between the first display mode and the second display mode, only with respect to a position corresponding to the region.

3. The information processing apparatus (1) according to claim 1,
wherein the specific switching condition includes a condition that, when the second display mode is set in the region, the region has disappeared from the screen of the display device (11).

4. The information processing apparatus (1) according to claim 1,
wherein the specific switching condition includes a condition that, when the second display mode is set in the region, an input of the information to the region has finished.

5. The information processing apparatus (1) according to claim 1,
wherein the controller (21) causes the display device (11) to display a screen including the region, and another region, different from the region, for displaying another information inputted to the operation device (10), and
the specific switching condition includes a condition that, when the second display mode is set in the region, an input of the other information to the other region has started.

6. The information processing apparatus (1) according to claim 1,
wherein the specific switching condition includes a condition that, when the second display mode is set in the region, the controller (21) has caused the display device (11) to display a predetermined dialog of higher display priority, on the screen.

7. The information processing apparatus (1) according to claim 1,
wherein the controller (21) causes the display device (11) to display a screen including the region, and another region, different from the region, for displaying another information inputted to the operation device (10),
the switching operation decider (22) further decides whether one of a third switching operation for switching the display mode of the other region from the first display mode to the second display mode, and a fourth switching operation for switching the display mode of the other region from the second display mode to the first display mode,
the controller (21) switches the display mode of the other region from the first display mode to the second display mode, when the switching operation decider (22) decides that the third switching operation has been performed, while the first display mode is set in the other region, and switches the display mode of the other region from the second display mode to the first display mode, when the switching operation decider (22) decides that the fourth switching operation has been performed, while the second display mode is set in the other region, and
the specific switching condition includes a condition that, when the second display mode is set in the region, the third switching operation has been performed.

8. The information processing apparatus (1) according to claim 1,
wherein the specific switching condition includes a condition that a predetermined time has elapsed, after the display mode of the region was switched from the first display mode to the second display mode.

9. The information processing apparatus (1) according to claim 1, further comprising:
an image reading device including a document feeding device that transports a document;
a sheet feeding device including a sheet cassette; and
at least one of a first detector that detects an open state or a closed state of the document feeding device, and a second detector that detects an open state or a closed state of the sheet cassette,
wherein the specific switching condition includes at least one of a condition that the document feeding device has been opened or closed, and a condition that the sheet cassette has been opened or closed, and
the condition establishment decider (23) decides at least one of:
whether the document feeding device has been opened or closed, on a basis of a detection result from the first detector; and
whether the sheet cassette has been opened or closed, on a basis of a detection result from the second detector.

10. The information processing apparatus (1) according to claim 1, further comprising:
a third detector that detects a person located in a predetermined detection range from the information processing apparatus (1); and
a fourth detector that detects a gaze line of the person in the detection range, detected by the third detector,
wherein the specific switching condition includes a condition that the person detected by the third detector turns the gaze line away from the region, and
the condition establishment decider (23) decides whether the person detected by the third detector has turned the gaze line away from the region, on a basis of a detection result from the fourth detector.

11. A computer-readable, non-transitory recording medium having a display mode switching program recorded thereon, the display mode switching program being configured to cause a computer to act as:
a controller (21) that causes a display device (11) to display a screen including a region for displaying information inputted to an operation device (10), and switches setting of a display mode of the information in the region, between a first display mode, including displaying the information in a first display form that restricts a content of the information from being visually recognized, and a second display mode, including displaying the information in a second display form that enables the content of the information to be visually recognized;
a switching operation decider (22) that decides whether one of a first switching operation, for switching the display mode on the region from the first display mode to the second display mode, and a second switching operation, for switching the display mode on the region from the second display mode to the first display mode, has been performed through the operation device (10); and
a condition establishment decider (23) that decides whether a specific switching condition, different from a switching condition specifying that the second switching operation has been performed, has been established,
wherein the controller (21) is configured to:
switch the setting of the display mode in the region from the first display mode to the second display mode, when the switching operation decider (22) decides that the first switching operation has been performed, while the first display mode is set in the region;
switch the setting of the display mode in the region from the second display mode to the first display mode, when the switching operation decider (22) decides that the second switching operation has been performed, while the second display mode is set in the region; and
switch the setting of the display mode in the region from the second display mode to the first display mode, when the condition establishment decider (23) decides that the specific switching condition has been established, while the second display mode is set in the region.

12. A display mode switching method comprising:
a controlling process including causing a display device (11) to display a screen including a region for displaying information inputted to an operation device (10), and switching setting of a display mode of the information in the region, between a first display mode, including displaying the information in a first display form that restricts a content of the information from being visually recognized, and a second display mode, including displaying the information in a second display form that enables the content of the information to be visually recognized;
a switching operation deciding process including deciding whether one of a first switching operation, for switching the display mode on the region from the first display mode to the second display mode, and a second switching operation, for switching the display mode on the region from the second display mode to the first display mode, has been performed through the operation device (10); and
a condition establishment deciding process including deciding whether a specific switching condition, different from a switching condition specifying that the second switching operation has been performed, has been established,
the controlling process further including:
switching the setting of the display mode in the region from the first display mode to the second display mode, when the switching operation decider (22) decides that the first switching operation has been performed, while the first display mode is set in the region;
switching the setting of the display mode in the region from the second display mode to the first display mode, when the switching operation decider (22) decides that the second switching operation has been performed, while the second display mode is set in the region; and
switching the setting of the display mode in the region from the second display mode to the first display mode, when the condition establishment decider (23) decides that the specific switching condition has been established, while the second display mode is set in the region.
